# EUROPEAN PATENT APPLICATION

(11) **EP 4 354 231 A1**
(43) Date of publication of application: **17.04.2024**
(21) Application number: 23202527.0
(22) Date of filing: 09.10.2023
(51) Int. Cl.: G05B 9/02, G05B 13/02, G05B 19/418

(54) **SYSTEMS AND METHODS FOR IMPLEMENTING MACHINE LEARNING IN A LOCAL APL EDGE DEVICE WITH POWER CONSTRAINTS**

(30) Priority: 10.10.2022 US 202263414789 P; 28.09.2023 US 202318374101
(71) Applicant: Schneider Electric Systems USA, Inc., Foxborough, Massachusetts 02035 (US)
(72) Inventor: Mahajan, Harshad, 500081 Telangana, WD (IN); Baskaran, Harikrishnan, Foxboro, MA 02035 (US)
(74) Representative: Manitz Finsterwald Patent- und Rechtsanwaltspartnerschaft mbB

(57) **Abstract**

A method performed by an Advanced Physical Layer (APL)-based edge device with power constraints is provided. The method includes applying an event-driven framework that is compliant with power constraints of the APL-based edge device to receive input data; applying the event-driven framework to the input data to invoke a machine learning (ML) model that is trained to analyze the input data and make inferences about one or more aspects of an industrial system based on the input data, and applying the invoked machine learning model to analyze the input data and make an inference about the one or more aspects of the industrial system based on the input data. The input data is received by the APL-based edge device from one or more source field devices of the industrial system and/or the inference is used make a decision and cause an action to be applied to the industrial system.

## Description

### CROSS REFERENCE TO RELATED APPLICATIONS

This application claims priority to U.S. Provisional Patent Application Serial No. 63/414,789 filed October 10, 2022, which is incorporated herein by reference in its entirety.

### TECHNICAL FIELD

The present disclosure relates to industrial systems having edge devices that are configured to use advanced physical layer (APL), and more particularly, to implementation of machine learning on the edge devices in view of the power constraints of APL.

### BACKGROUND

Advanced physical layer (APL) is a physical layer that makes it possible for edge devices of an industrial system to use industrial Ethernet in a hazardous environment. APL edge devices (meaning edge devices that are configured to use APL) have a rugged two-wire connection via which they have Ethernet connectivity and receive their power. Power received over the two-wire connection can be the sole power for an APL edge device. The power received over the two-wire connection is constrained. The constraint can be physical and/or for compliance with regulations. An example power constraint is 1.1W.

APL edge devices have minimal resources (e.g., processing and memory resources) to perform tasks, such as monitoring conditions in the industrial system, performing computations, and controlling components of the industrial system. The resources need to be able to perform using the little power available due to the power constraints.

Much analysis of data received by an edge device from sensors can be performed in the cloud. Such analysis can include processing of raw or minimally processed sensor data (also referred to as preprocessed data), as well as application of machine learning to perform classification of conditions of the industrial system based on sensor data, make inferences about conditions of the industrial system based on sensor data, perform decision making based on the analysis, and perform control actions. This can entail sending the raw or preprocessed sensor data from the edge device to a processor in the cloud and/or sending control instructions to a controlling edge device. The data sent between the edge device and the cloud can consume a significant amount of communication bandwidth.

Although the amount of communication bandwidth consumed could be theoretically reduced by performing machine learning tasks at the edge device, an APL edge device has power constraints that present a challenge to making this possible. This disclosure addresses the challenge of implementing machine learning on an APL edge device that has power constraints.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings. To achieve these and other advantages and in accordance with the purpose of the illustrated embodiments, in one aspect, disclosed is a computer-implemented method performed by an Advanced Physical Layer (APL)-based edge device, wherein the APL-based edge device has power constraints.

The method includes applying an event-driven framework that is compliant with power constraints of the APL-based edge device to receive input data, applying the event-driven framework to the input data to invoke a machine learning (ML) model that is trained to analyze the input data and make inferences about one or more aspects of an industrial system based on the input data, and applying the invoked machine learning model to analyze the input data and make an inference about the one or more aspects of the industrial system based on the input data. The input data is received by the APL-based edge device from one or more source field devices of the industrial system and/or the inference is used make a decision and cause an action to be applied to the industrial system.

In certain embodiments, the method can further include training the ML model using an external computing device and deploying the ML model on the APL-based edge device.

In certain embodiments, the action can be caused by controlling one or more actuators communicatively coupled to the to the APL-based edge device.

In certain embodiments, the method can further include outputting the inference by transmitting the inference to a second APL edge device that causes the action.

In certain embodiments, the method can further include outputting the inference by transmitting the inference to a cloud-based processor that causes a second APL edge device to cause the action.

In certain embodiments, the input data can include sensor data output by a sensor, wherein analyzing the input data and the making the inference about the one or more aspects of the industrial operation includes detecting and characterizing normal operating conditions associated with the one or more aspects of the industrial system based on the sensor input data, and recognizing abnormal conditions associated with the one or more aspects of the industrial system based on the sensor input data.

In certain embodiments, the input data can include machine-learning result data provided by another APL device or a cloud device that analyzed sensor data using a trained ML model. Analyzing the input data and the making the inference about the one or more aspects of the industrial system can include detecting and characterizing normal operating conditions associated with the one or more aspects of the industrial system based on the sensor input data, and recognizing abnormal conditions associated with the one or more aspects of the industrial system based on the machine-learning result data.

In certain embodiments, the method can further include generating, using the inference, control data configured to control a device and outputting the control data.

In another aspect of the disclosure, an APL-based edge device having power constraints is provided. The APL-based edge device includes an embedded processing device and memory, the memory configured to store a plurality of programmable instructions, and the processing device in communication with the memory. The processing device, upon execution of the plurality of programmable instructions is configured to apply an event-driven framework that is compliant with power constraints of the APL-based edge device to receive input data, apply the event-driven framework to the input data to invoke an ML model that is trained to analyze the input data and make inferences about one or more aspects of an industrial system based on the input data, and apply the invoked machine learning model to analyze the input data and make an inference about the one or more aspects of the industrial system based on the input data. The input data is received by the APL-based edge device from one or more source field devices of the industrial system and/or the inference is used to make a decision and cause an action to be applied to the industrial system.

In certain embodiments, the action can be caused by controlling one or more actuators communicatively coupled to the to the APL-based edge device.

In certain embodiments, the processing device, upon execution of the plurality of programmable instructions, can be further configured to output the inference by transmitting the inference to a second APL edge device that causes the action.

In certain embodiments, the processing device, upon execution of the plurality of programmable instructions, can be further configured to output the inference by transmitting the inference to a cloud-based processor that causes a second APL edge device to cause the action.

In certain embodiments, the input data can include sensor data output by a sensor, wherein analyzing the input data and the making the inference about the one or more aspects of the industrial operation can include detecting and characterizing normal operating conditions associated with the one or more aspects of the industrial system based on the sensor input data, and recognizing abnormal conditions associated with the one or more aspects of the industrial system based on the sensor input data.

In certain embodiments, the input data can include machine-learning result data provided by another APL device or a cloud device that analyzed sensor data using a trained ML model. Analysis of the input data and the making the inference about the one or more aspects of the industrial operation can include detecting and characterizing normal operating conditions associated with the one or more aspects of the industrial system based on the sensor input data, and recognizing abnormal conditions associated with the one or more aspects of the industrial system based on the machine-learning result data.

In certain embodiments, the processing device, upon execution of the plurality of programmable instructions, can be further configured to generate, using the inference, control data configured to control a device and output the control data.

In accordance with still a further aspect of the disclosure, a method performed by a cloud-based computing device of an industrial system is provided. The method includes communicating with an IT-based network via standard Ethernet, communicating with an APL switch of the industrial system via standard Ethernet, communicating with at least one APL-based edge device of the industrial system using APL Ethernet via the APL switch, and receiving first inferences about one or more aspects of the industrial system from a first ML model deployed on the at least one APL-based edge device and/or transmitting data to a second ML model deployed on the at least one APL-based edge device for processing by the ML model to make second inferences about the one or more aspects of the industrial system.

In certain embodiments, the first inferences are received and the method can further include aggregating the first inferences over time and/or over a plurality of APL edge devices of the at least one APL edge devices.

In certain embodiments, the method can further include generating control data based on a result of the aggregation, wherein the control data is configured to control a field device of the industrial system, and outputting the control data to the at least one APL-based edge device.

In certain embodiments, the second inferences can be configured to be used for generating control signals to control a field device of the industrial system, and the data transmitted to the second ML model can be configured to be processed via the second ML model for making the second inferences.

In accordance with an additional aspect of the disclosure, a cloud-based computing device having one or more memories configured to store a plurality of programmable instructions, and one or more processing devices in communication with the one or more memories. The one or more processing devices, upon execution of the plurality of programmable instructions, are configured to perform the disclosed method.

In accordance with further aspects of the disclosure, a one or more non-transitory computer readable storage mediums and one or more computer programs embedded therein is provided, which when executed by a computer system (in one or more embodiments the embedded processing device of the APL-based edge device, and in one or more embodiments the at least one processing device of the cloud-based computing device, cause the computer system to perform the corresponding disclosed method.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

A more detailed description of the disclosure, briefly summarized above, may be had by reference to various embodiments, some of which are illustrated in the appended drawings. While the appended drawings illustrate select embodiments of this disclosure, these drawings are not to be considered limiting of its scope, for the disclosure may admit to other equally effective embodiments.
FIG. 1 is a block-flow diagram illustrating an industrial system and method, in accordance with a first scenario, for implementing a trained machine learning (ML) model on one or more advanced physical layer (APL) edge devices, in accordance with embodiments of the disclosure;
FIG. 2 is a block-flow diagram illustrating a system and method for training a trained ML model and deploying the trained ML model on an APL edge device designed to receive input from field device(s), in accordance with embodiments of the disclosure;
FIG. 3 is a block-flow diagram illustrating an industrial system and method, in accordance with another scenario, for implementing a trained ML model on one or more APL edge devices, in accordance with embodiments of the disclosure;
FIG. 4 is a block-flow diagram illustrating an industrial system and method, in accordance with still another scenario, for implementing a trained ML model on one or more APL edge devices, in accordance with embodiments of the disclosure;
FIG. 5 is a block-flow diagram illustrating a system and method for training a trained ML model and deploying the trained ML model on an APL edge device designed to control field device(s), in accordance with embodiments of the disclosure;
FIG. 6 is a block-flow diagram illustrating an industrial system and method, in accordance with a further scenario, for implementing a trained ML model on one or more APL edge devices, in accordance with embodiments of the disclosure;
FIG. 7 is a flow diagram illustrating a method of applying an event-driven framework that has tasks for receiving input data from field devices for applying ML to the received input data, in accordance with embodiments of the disclosure;
FIG. 8A is a sequence diagram showing example flows performed by a sensor task of an event-driven framework, in accordance with embodiments of the disclosure;
FIG. 8B is a sequence diagram showing example flows performed by an ML task of an event-driven framework, in accordance with embodiments of the disclosure;
FIG. 9 is a flow diagram illustrating a method of applying an event-driven framework that has tasks for receiving ML results, applying ML to the received ML results, and outputting control data to control field device(s), in accordance with embodiments of the disclosure;
FIG. 10A is a flowchart illustrating an example method of applying an event-driven framework to invoke ML to process input data and generate outputs based on a result of the ML processing;
FIG. 10B is a flowchart illustrating an example method performed by a cloud device in communicating with one or more APL-based edge devices, wherein the one or more APL-based edge devices are configured to make inferences using ML; and
FIG. 11 is a block diagram of an exemplary computer system that could be used to implement computing components of the industrial systems or ML training systems of FIGS. 1-6 and to implement the methods of the disclosure.

Identical reference numerals have been used, where possible, to designate identical elements that are common to the figures. However, elements disclosed in one embodiment may be beneficially utilized on other embodiments without specific recitation.

### DETAILED DESCRIPTION

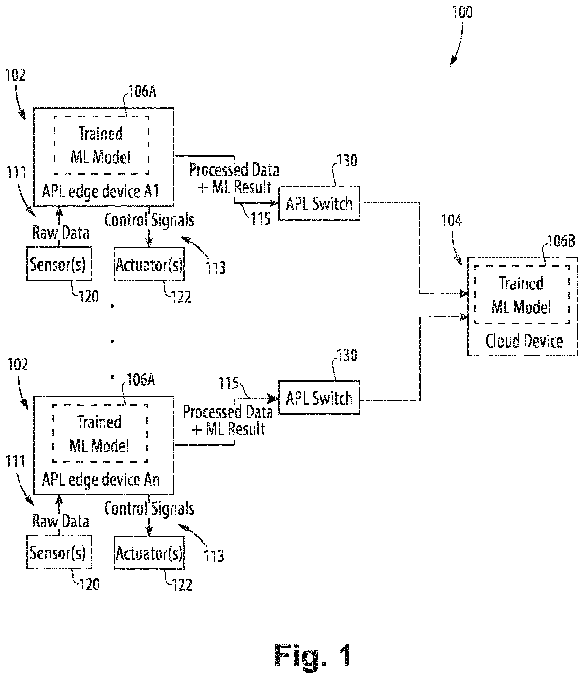

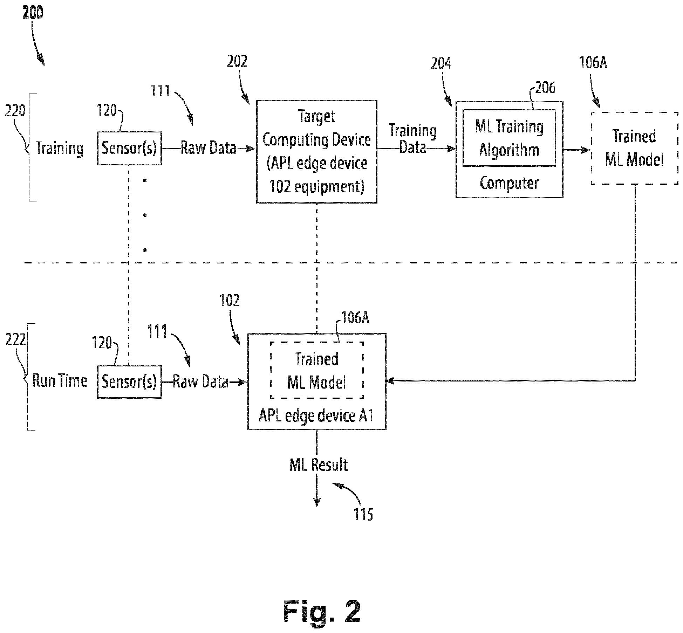

Reference will now be made to the drawings wherein like reference numerals identify similar structural features or aspects of the subject disclosure. For purposes of explanation and illustration, and not limitation, a block diagram of an exemplary embodiment of an industrial system in a first scenario in accordance with the disclosure is shown in FIG. 1 and is designated generally by reference character 100. Other embodiments of the industrial system in accordance with the disclosure, or aspects thereof, are provided in FIGS. 2-11, as will be described.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth. It is to be appreciated the embodiments of this disclosure as discussed below are implemented using a software algorithm, program, or code that can reside on a computer useable medium for enabling execution on a machine having a computer processor. The machine can include memory storage configured to provide output from execution of the computer algorithm or program.

As used herein, the term "software" is meant to be synonymous with any logic, code, or program that can be executed by a processor of a host computer, regardless of whether the implementation is in hardware, firmware or as a software computer product available on a memory storage device or for download from a remote machine. The embodiments described herein include such software to implement the equations, relationships, and algorithms described above. One skilled in the art will appreciate further features and advantages of the disclosure based on the above-described embodiments. Accordingly, the disclosure is not to be limited by what has been particularly shown and described, except as indicated by the appended claims.

With reference to FIG. 1, the industrial system in accordance with a first scenario 100 includes a plurality of advanced physical layer (APL) edge devices 102 (labeled APL edge device A1 An); source field devices that input data to an edge device 102, such as sensors 120; target field devices that receive output data from an edge device 102, such as actuators 122 or alarms; and a cloud device 104. Each sensor 120 is coupled to a corresponding edge device 102 via a data path 111. Each actuator is coupled to a corresponding edge device 102 via a data path 113. Data paths 111 and 113 are included in a local network that enables communication with field devices using an industrial protocol, such as HART^{™}, Modbus^{™}, or Fieldbus^{™}, without limitation. Data path 115 is coupled to a two-wire -APL connection of the corresponding APL edge device 102 in compliance with the APL.

APL edge devices 102 and 302 (as shown in FIGS. 1-6), also referred to as APL-based edge devices, are configured to communicate via Ethernet-APL. Ethernet-APL uses industrial Ethernet on a physical layer, uses a ruggedized two-wire connection, and uses limited current and voltage that are considered to be compliant with Zones 0 and 1 of an intrinsically safe environment (e.g., in accordance IEC apparatus standard IEC 60079-11). On the other hand, cloud-based device 104 is configured to communicate with a remote network (such as the Internet or a private local area network (LAN) or wide area network (WAN)) that uses an information technology (IT)-based standard Ethernet.

An APL switch 130 is provided in between each edge device 102 (using APL Ethernet) and cloud device 104 (using standard IT-based Ethernet) for enabling Ethernet communication between the APL edge devices 102 and 302 and cloud device 104. APL-edge devices 102 and 302 can exchange information with field devices via the local network using industrial protocols and can use Ethernet-APL to communicate with cloud-based device 104 via a corresponding APL switch 130. In addition to enabling communication with cloud-based device 104, APL switch 130 provides power via its two-wire connection with connected APL edge devices 102 and 302.

APL-edge devices 102 and 302 receive all of their power over the two-wire connection. This causes APL-edge devices 102 and 302 to have power constraints. APL-edge devices 102 and 302 do not need any other power source, such as a battery. APL edge devices 102 and 302 may be precluded from using a battery due to regulatory requirements associated with intrinsically safe zones.

Each sensor 120 senses or measures a physical property and outputs a corresponding analog or digital signal as raw data. Raw data from a sensor 120 refers to data that is output by sensor 120 before being processed by a different device and can include data that was not processed at all or was preprocessed by sensor 120. Examples of physical properties sensed or measured by sensors include temperature, pressure, speed, flow, vibration, current, proximity, etc. Each actuator 122 is a mechanical or electro-mechanical device that converts energy from a control signal into mechanical motion, e.g., for controlled movement or positioning. For example, an actuator can regulate a flow of fuel to a gas turbine, operate a valve, apply pressure, operate a switch, etc.

Referring to APL edge device 102 A1 (as an example for APL edge devices 102 A1-An), APL edge device 102 A1 receives input data (raw sensor data from one or more sensors 120. Additionally and optionally, the APL edge device 102 A1 can output control signals to one or more actuators 122. A control signal provides an instruction to an actuator 122 to perform an action (e.g., open or close a valve, open or close an electrical switch, activate an alarm, etc.).

APL edge device 102 A1 is configured to transmit data between a local network that includes, for example, sensors 120 and actuators 122, and devices in a remote network (referred to as the cloud). APL edge device 102 A1 includes the hardware, software, and/or firmware for communicating with the local network and for communicating with the remote network.

APL edge device 102 A1 includes an embedded processing device and memory, such as a microprocessor or microcontroller that receives data from one or more source field devices (e.g., sensors 120) in the local network, processes the received data using a trained machine leaning (ML) model 106A, and transmits data based on a result of the processing to cloud device 104. APL edge device 102 A1 includes memory (volatile and nonvolatile), which is configured to store trained ML model 106A that has been previously trained and deployed on APL edge device 102 A1. APL edge device 102 A1 includes the hardware, software, and/or firmware for processing input data using trained ML model 106A and transmitting results of the ML to cloud device 104 and/or using the ML results to send control signals to actuator(s) 122.

APL edge device 102 A1 can be configured to perform certain functions on the input data. These functions can be defined by function blocks or the like that are installed on APL edge device 102 A1. Some functions that can be performed by APL edge devices A1 102 on raw data include preprocessing the raw data to prepare the raw data for ML, processing the raw data to make inferences using ML and generate an ML result, and processing the raw data for performing analytics and/or control functions. Preprocessing the raw data can include extracting data of interest for ML processing, rejecting data that was not selected for extraction, normalizing the raw data, e.g., using digital filters (e.g., to normalize signal strength when the raw data has a very low or very high data strength). Other broader categories of preprocessing that can be performed to the input data to prepare it for ML processing include, for example, data quality assessment, data cleaning, data transformation, and/or data reduction.

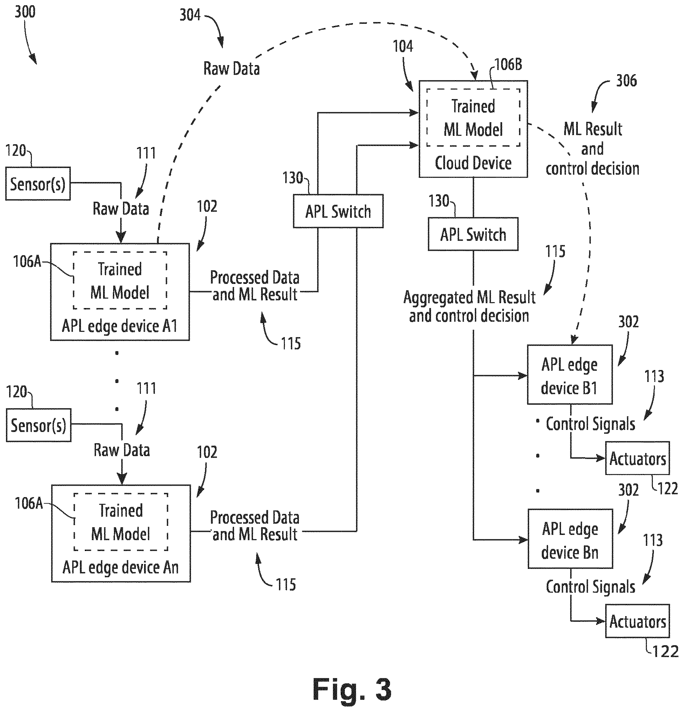

Trained ML model 106A is trained by a different computing system and deployed on the APL edge device 102. Trained ML model 106A is trained to process preprocessed input data (e.g., the input data being raw data from sensor(s) 120), make inferences using ML (such as detecting an occurrence of an anomaly in streaming data from sensor(s) 120), and outputting a result of the ML. The ML result is provided to cloud device 104 and/or used to send a control signal to one or more coupled actuators 122. In other scenarios (e.g., see FIGS. 3, 4, 6), APL edge device 102 can receive processed data from cloud device 104 or from another edge device 102, process the received data (with or without ML, depending on the scenario), and use a result of the processing to output control signals to one or more coupled actuators 122.

Cloud device 104 resides in the remote network and includes one or more computing devices, such as a server, main frame computer, desktop computer, mobile computing device, etc., as well as a cloud-based machine-learning (ML) model 106B that executes on the one or more computing devices. Cloud device 104 may include or access a neural network for performing ML processing.

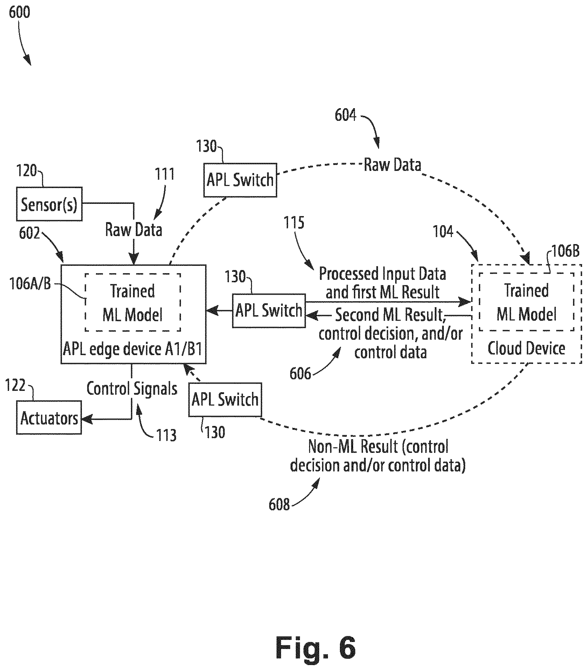

Cloud device 104 includes the hardware, software, and/or firmware for communicating with APL edge device A1 (as well as other APL edge devices, such as APL edge devices B1-Bn shown in FIGS. 3 and 6. Cloud device 104 is configured to receive (via APL transfer switch 130), process, and/or aggregate data from one or more edge devices 102 and apply cloud-based machine-learning (ML) model 106B to the data. A result of the ML processing can be used for various purposes based on the scenario. In one scenario, the result of the ML processing is not used for generating control signals to actuator(s) 122 but is be used for other purposes that are not within the purview of this disclosure. In another scenario, the result of the ML processing can include or be provided with a control decision that can be processed by an APL edge device (such as APL edge devices B1-Bn in FIGS. 3 and 6) for generating control signals that can be sent to a target field device. The processing by the APL edge device may use ML (as shown in FIG. 6) or may not use ML (as shown in FIG. 3).

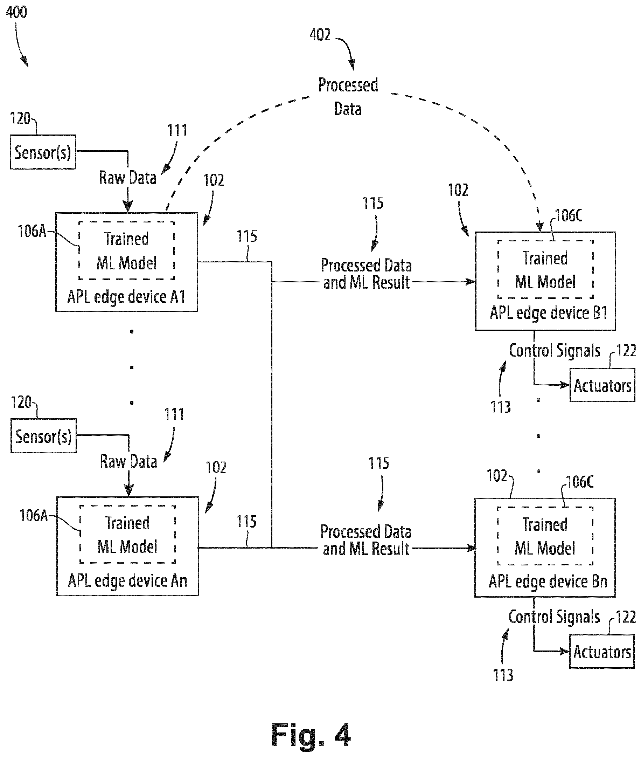

APL edge device 102 A1 resides in the local network and includes a microprocessor or microcontroller. The microprocessor or microcontroller is configured to receive input data from one or more source field devices (e.g., sensors 120) in the local network, process the received input data using a trained machine leaning (ML) model 106A, and transmit data based on a result of the ML to cloud device 104. APL edge device 102 A1 includes memory (volatile and nonvolatile), which is configured to store trained ML model 106A. Trained ML model 106A was previously trained and deployed on APL edge device 102 A1. APL edge device 102 A1 includes the hardware, software, and/or firmware for processing the input data using trained ML model 106A and transmitting results of the ML to cloud device 104 (as shown in FIGS. 1, 3, and 6), using the ML results to send control signals to one or more target field devices (e.g., actuator(s) 122) (as shown in FIGS. 1, 3, 4, and 6, and/or sending the ML results to another APL edge device 102 (such as APL edge device(s) B1-Bn shown in FIG. 4).

APL edge devices A1-An output an ML result that can be used by cloud device 104 to make a decision (with or without using ML) that causes an action to be applied to one or more target field devices (e.g., by any of APL edge devices B1-Bn) of the industrial system or to perform analysis. APL edge devices A1-An output an ML result that can be used by the same APL edge device (of APL edge devices A1-An) or a different APL edge device (of APL edge devices B1-Bn) to make a decision (with or without using ML) and cause an action to be applied to one or more target field devices.

With reference to FIG. 2, an ML training system 200 is shown for training and deploying trained ML model 106A during a training phase 220 so that trained ML model 106A is ready to be used during a run time phase 222. During training phase 220, a target device 202 can receive input data and provide the input data as training data to computer 204. The input data can include raw data received from sensors via a data path, such as data path 111. Target device 202 can be APL edge device 102 or a different computing device that is equivalent to APL edge device 102 (having similar configuration and functionality as APL edge device 102). Target device 202 be configured with or without APL capability. In one or more embodiments, target computing device 202 can perform non-ML processing of the input data before passing the processed input data as training data to computer 204. This can include preprocessing of the input data to prepare the training data, such as by using one or more of the preprocessing techniques described for edge device 102 A1 with respect to FIG. 1.

Computer 204 includes one or more computing devices, such as a server, main frame computer, desktop computer, mobile computing device, etc., as well as a ML training algorithm 206 that executes on the one or more computing devices. Computer 204 may be configured with an ML accelerator processor, such as a graphical processing unit (GPU) or a tensor processing unit (TPU). Computer 204 can include or access a neural network for performing ML processing.

ML training algorithm 206 is configured to process the received training data to train an ML model to characterize training data that corresponds to normal operating conditions, to classify training data as indicating normal or abnormal conditions, to make inferences from the training data, and or to make decisions based on the inferences, such as to, without limitation, generate alerts or alarms, control an edge device to control a one or more target field devices (e.g., actuator(s) 122), or control an edge device to perform additional monitoring.

The trained ML model 106A is deployed on APL edge device 102. Once deployed, APL edge device 102 can use trained ML model 106A to process input data, e.g., raw data from a source field device (e.g., sensor(s) 120). The input data can be preprocessed to prepare it for processing by trained ML model 106A. This can include preprocessing of the input data to prepare the training data, such as by using one or more of the preprocessing techniques described for edge device 102 A1 with respect to FIG. 1. After performance of any preprocessing, the input data is processed by trained ML model 106A to classify and make inferences and decisions about the input data and output an ML result, e.g., to an actuator (e.g., actuator 122 in FIG. 1), another edge device (e.g., edge device 302 in FIG. 3), or a cloud device (e.g., cloud device 104 in FIG. 1). In one or more embodiments, the input data can be also used to continuously train trained ML model 106A. The decisions can include control signals that control the actuator.

FIG. 3 is a block, flow diagram of an industrial system in accordance with another scenario 300 of the industrial system. The industrial system in accordance with scenario 300 includes one or more APL edge devices 302 (labeled as APL edge device B1 - APL edge device Bn) that do not include a trained ML model or the like for using ML to process incoming data. In this scenario, trained ML models 206A of one or more APL edge devices 102 A1-An process raw data received from sensor(s) 220 and output an ML result. In addition, APL edge devices 102 A1-An can process the raw data without application of the trained ML model and output processed data. The ML data and processed data are provided to cloud device 104 via corresponding data paths 115. In addition, some or all of sensor(s) 220 can submit raw data to cloud device 104 independent of APL edge device 102.

A data path 304 is used for submitting the raw data by sensor(s) 220 to cloud device 104. Data path 304 is an optional data path via which raw data can be provided from an edge device (shown as edge device 102 A1) to cloud device 104. This option would be available for an example scenario in which trained ML model 106B has been trained to process raw data, or similar scenarios.

Reference is made to APL edge device 302 B1 as an example of APL edge devices B1-Bn. APL edge device 302 B1 includes the hardware, software, and/or firmware for communicating with the local network and for communicating with the remote network, e.g., to transmit data to a target device (e.g., one or more actuators 122) via the local network and to receive ML results, non-ML results, and/or control decisions from cloud device 104 via the remote network.

APL edge device 102 A1 includes a microprocessor or microcontroller and includes memory (volatile and nonvolatile). APL edge device 302 B1 can be configured to perform certain functions on the data it receives. These functions can be defined by function blocks or the like that are installed on APL edge device 102 A1.

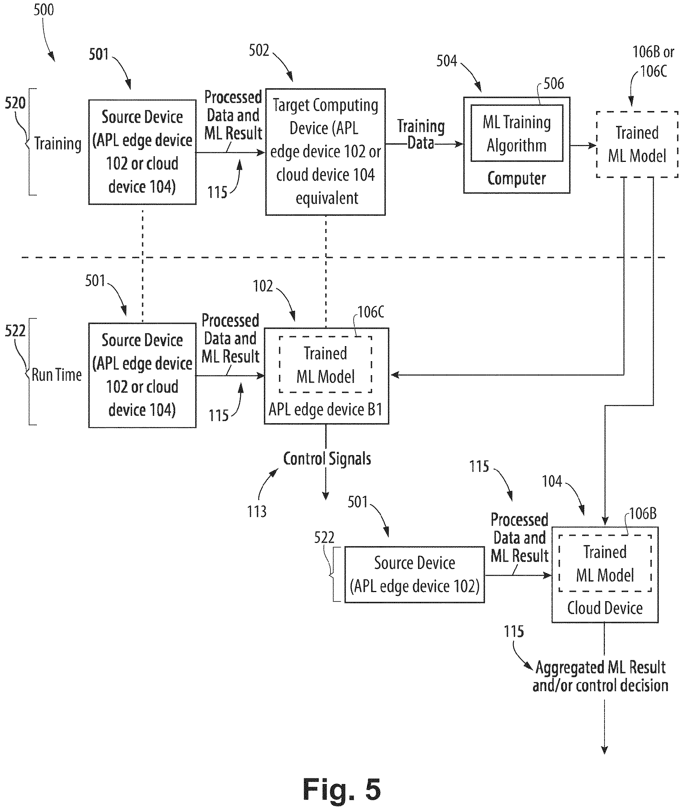

Trained ML model 106B is trained to process the processed data and ML results received from the one or more APL edge devices 102 A1-An, including aggregating the processed data and ML results. The aggregation can be an aggregation of processed data and ML results received from a plurality of the APL edge devices 102 A1-An or can be an aggregation of processed data and ML results received from the one or more APL edge devices 102 A1-An over time. Training of trained ML model 106B is shown and described with respect to FIG. 5.

Cloud device 104 can also perform non-ML processing on the ML results received from APL edge devices 102 A1-An to generate a control decision, such as by using aggregation (over time and/or across different APL edge devices 102 A1-an), statistical processing, and/or logic. Results of the non-ML processing and the control decisions can be provided to AP edge devices 302 B1-Bn via data path 306.

FIG. 4 is a block, flow diagram showing an industrial system in accordance with another scenario 400. The industrial system in accordance with scenario 400 includes one or more APL edge devices 102 A1-An that receive raw data from sensors 120 via data paths 111 and one or more APL edge devices 102 (labeled as APL edge device B1 - APL edge device Bn) that include a trained ML model 106C for using ML to process incoming data, namely processed data and ML results from at least one APL edge device 102 of the one or more APL edge devices 102 A1-An. The processed data can be similar or the same as preprocessed data that as preprocessed prior to processing by a trained ML model 206A. Thus, each APL edge device 102 B1-Bn can receive processed data and ML results from more than one of APL edge devices 102 A1-An. A cloud device is not used for in scenario 400.

In this scenario, trained ML models 206A of one or more APL edge devices 102 A1-An process the raw data received from sensor(s) 220 and output an ML result. In addition, APL edge devices 102 A1-An can process the raw data without application of the trained ML model and output processed raw data. The ML result and processed data are provided to APL edge devices 102 B1-Bn via data path 115. Data path 402 is an optional data path via which processed data (without ML results) can be provided from an any of edge devices 102 A1-An to any of APL edge devices 102 B1-Bn. This option would be available for an example scenario in which trained ML model 106C has been trained to process processed data, but not ML results, or similar scenarios.

APL edge devices 102 B1-Bn are configured to provide control signals to one or more corresponding actuators 122 via data paths 113. Actuators 122 are shown by way of example and can be any target field device that is configured to manipulate a process of industrial system 100 (such as a valve actuator, a pump or motor relay) or provide an alarm (e.g., a visual or audio indicator, such as an alarm LED or horn). Trained ML model 106C of each APL edge device 102 B1-Bn receives input data, including ML results and processed data received via data paths 115. In one or more embodiments, the input data further includes the processed data received via path 402. The ML processing can include aggregating data input data received from one or multiple APL edge devices 102 A1-An over time, characterizing the input data as normal or abnormal. The control signals are based on a result of the ML processing performed by trained ML model 106C.

Each trained ML model 106C is trained to classify the input data as indicating normal or abnormal conditions, to make inferences from the input data, and or to make decisions based on the inferences, such as to, without limitation, control a corresponding actuator 122. Decisions made by trained ML model 106C cause generation of the control signals that are submitted to the corresponding actuator(s) 122.

With reference to FIG. 5, an ML training system 500 is shown for training and deploying trained ML model 106B or trained ML model 106C during a training phase 520 so that trained ML model 106B or trained ML model 106C is ready to be used during a run time phase 522. During training phase 520, a target computing device 502 receives input data.

During training phase 520, in a first scenario when training trained ML model 106B, source device 501 can be an APL edge device (or different computing device that is equivalent to APL edge device 102) and target computing device 502 can be cloud device 104 (or a different computing device that is equivalent to cloud device 104). In a second scenario when training trained ML model 106C, source device 501 can be cloud device 104 (or a different computing device that is equivalent to cloud device 104) or an APL edge device (or different computing device that is equivalent to APL edge device 102). Target computing device 502 can be one of APL edge devices 102 B1-Bn or a different computing device that is equivalent to APL edge device 102 B1-Bn. In both first and second scenarios, source computing device 501 and target computing device 502 can be configured with or without APL capability In the first scenario when training trained ML model 106B, the input data can include ML results and/or processed data received from one or more APL edge devices 102 A1-An. In the second scenario when training ML model 106C, the input data can include ML results and/or processed data received from cloud device 104. Target computing device 502 as trained data to computer 504. In one or more embodiments, target computing device 502 can perform non-ML processing on the input data before passing the processed input data as training data to computer 504. This non-ML processing can include preprocessing of the input data (similar to preprocessing performed by target device 202 shown in FIG. 2) .

Computer 504 can be similar to computer 204 described in FIG. 2. Computer 504 includes one or more computing devices, such as a server, main frame computer, desktop computer, mobile computing device, etc., as well as a ML training algorithm 506 that executes on the one or more computing devices. Computer 504 may be configured with an ML accelerator processor, such as a GPU or TPU and may include or access a neural network for performing ML processing ML training algorithm 506 is configured to process the received training data to train an ML model to aggregate the training data, characterize the training data that corresponds to normal operating conditions, to classify the training data as indicating normal or abnormal conditions, to make inferences from the training data, and or to make decisions based on the inferences.

In the first scenario, when training ML model 106B, ML model 106B can output ML results, including aggregation results, a control decision, and/or control data (e.g., control signals), for example and without limitation. In the second scenario when training ML model 106C, ML model 106B can output ML results, including control signals, for example without limitation. The control signals can be output by the APL edge device 102 in which trained ML model 106C is deployed, such as to control a field device, such as an actuator 122, an alarm device, a processing device, or a sensor 120 that is coupled to the APL edge device 102, such as to generate an alarm or alert, control the actuator 122, or control the sensor 120 to perform additional monitoring.

During run time phase 522, in the first scenario when the trained model is trained ML models 106B, it is deployed on a cloud device 104. The trained model receives input data in place of the training data to classify and make inferences and decisions about the input data and output an ML result, e.g., to an APL edge device (e.g., APL edge device 302 in FIG. 3), or an actuator 122 (as shown in FIG. 6). The input data can be preprocessed by source device 501 (similar to the preprocessing performed by target device 502 in training phase 520). In one or more embodiments, the input data can be also used as training data to continuously train trained ML model 106A. The decisions can include control signals that control the actuator (or other devices, such as field devices (e.g., sensors) or alarms, without limitation) (see FIG. 6).

In the second scenario when the trained model is trained ML models 106C, it is deployed on an APL edge device 102 (shown in this example as APL edge device 102 B1). The trained model receives input data in place of the training data to classify and make inferences and decisions about the input data and output an ML result, including control signals, e.g., to a device, such as a coupled field device (e.g., actuator or sensor) or alarm, without limitation. The input data can be preprocessed by source device 501 (similar to the preprocessing performed by target device 502 in training phase 520).

FIG. 6 is a block, flow diagram showing an industrial system in accordance with another scenario 600. The industrial system in accordance with scenario 600 includes an APL edge device 602 (shown, for example, as having functionality of both APL edge device 102 A1 and APL edge device 102B1) in communication with a cloud device 104 having deployed on it a trained ML model 106B. APL edge device 602 is configured functionally and structurally the same as APL edge devices 102 A1-An and B1-Bn, except that both trained ML models 106A and 106C have been deployed on APL edge device 602. Trained ML models 106A and 106C can be combined into a single trained ML model, but are referred to separately to reference the corresponding functionality.

Similar to example APL edge device 102 A1, APL edge device 602 receives raw data from at least one source field device (e.g., sensor(s) 120) and processes the input data (meaning the raw data following any preprocessing) using trained ML model 106A. Some processing may also be performed by APL edge device 102 without using trained ML model 106A. APL edge device 102 transmits the first ML result and processed data to cloud device 104 via data path 115 and APL switch 130.

Cloud device 104 processes the processed data and first ML result and optionally can also process raw data from sensor(s) 120 received via data path 604. The processing can use trained ML model 106B to output a second ML result, a control decision, and/or control data.

Similar to example APL edge device 102 B1, APL edge device 602 processes the output from trained ML model 106B (namely the second ML result, a control decision, and/or control data) using trained ML model 106C and outputs a third ML result that can include a control decision and/or control data. APL edge device 602 uses the third ML result to generate control signals and provides the control signals via the remote network to one or more target field devices, such as actuator(s) 122 to provide control.

In one or more embodiments, non-ML data can be provided by cloud device 104 to APL edge device 602, in addition to or alternatively to, the second ML result output provided to actuator(s) 122 (and/or the other devices).

In one or more embodiments, output from trained ML model 106A can be processed by trained ML model 106C without transmission of ML results to or from cloud device 104. APL edge device 602 can use the results from trained ML model 106C for generating control signals. APL edge device 602 sends the control signals to the one or more field devices for causing an action.

Data path 604 is an optional data path via which raw or partially processed data from source field device(s) (e.g., sensor(s) 120) can be provided from APL edge device 602 to cloud device 104. This option would be available for an example scenario in which trained ML model 106B has been trained to process raw data, or similar scenarios.

Data path 608 is an optional data path via which non-ML results, which can include control decisions and/or control data, generated by cloud device 104 are provided to APL edge device 602. This option would be available for an example scenario in which trained ML model 106C has been trained to process non-ML results, or similar scenarios.

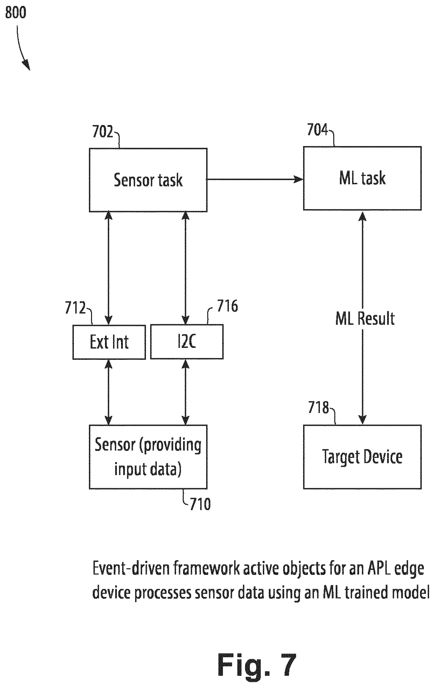

FIG. 7 is a flow diagram 700 that illustrates an example high-level flow of event-driven framework active objects for an APL edge device that receives input data 710 from one or more sensors, such as APL edge devices 102 that receive input data from sensors 220 in FIGS. 1-4, and 6. The active objects include a sensor task 702 and an ML task 704.

Sensor task 702 is an event-driven active object that handles input data received from the sensor(s) 710. ML task 704 is an event-driven active object that is invoked by sensor task 702. ML task 704 handles ML processing of the received input data and outputting a result of the ML processing, such as an inference, a direction, or control data. The ML result can be output to a target device, such as the APL edge device, a cloud device (such as cloud device 104 in FIGS. 1-4, 6, and 7), or another APL edge device (such as APL edge device 302 in FIG. 3 or APL edge devices 102 B1-Bn in FIG. 4.

In an example implementation, without limitation to the specific hardware example provided, sensor 710 is a sensor such as an accelerometer, pressure sensor, etc., that has an inter-integrated circuit (i2c) 716 as an interface and an external interrupt (Ext Int) 712, such as a general-purpose input/output (GPIO) interrupt. Ext Int 712 can transmit an interrupt signal in response to an outside interference, Sensor task. 702 is a software module in a microcontroller program of the APL edge device. Sensor task 702 reads data using i2c interface 716 in response to receiving an interrupt on Ext Int 712.

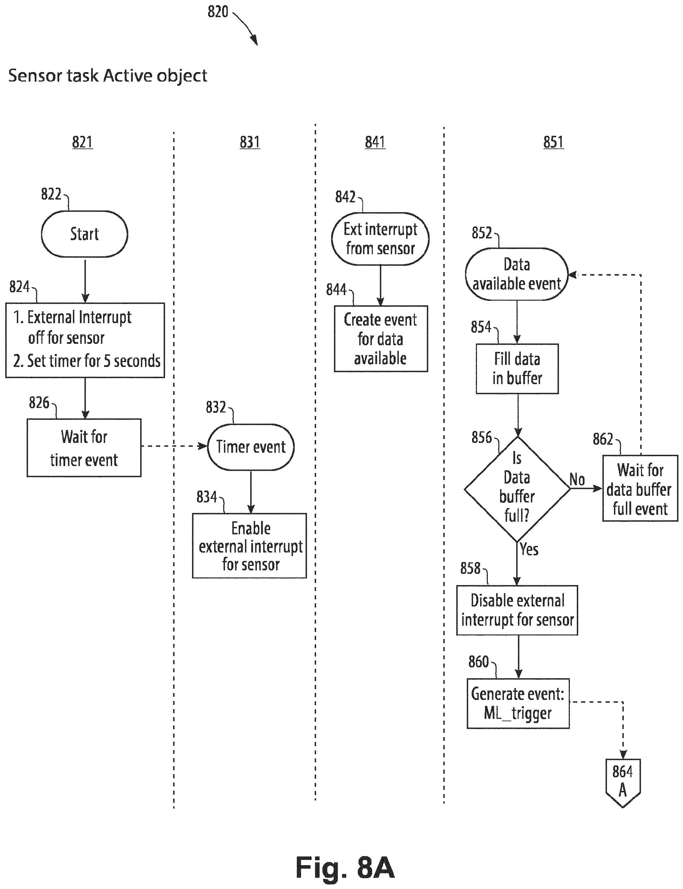

FIG. 8A shows a sequence diagram 820 that illustrates example flows performed by a sensor task, such as sensor task 702 of the active objects shown in FIG. 7. Column 821 represents a start of a sensor task, and each of columns 831, 841, and 851 represent an event-based subtask. The event-bast subtasks represented by columns 831, 841, and 851 run in parallel. With reference to column 821, a sensor task is started at block 822. At block 824, (1) a sensor associated with the sensor task (e.g., sensor 710 in FIG. 7) is initialized (such as by turning off an external interrupt (e.g., Ext Int 712 shown in FIG. 7) for the sensor, and (2) a timer is set for a first predetermined time interval (only once when initializing), such as five seconds. At block 826, a wait process is performed to wait for a timer event based on the timer set at block 824.

With reference to column 831, a timer event is detected at block 832. This timer event can be expiration of the timer set at block 324. At block 834, the sensor's external interrupt is enabled. With reference to column 841, arrival of an external interrupt (e.g., via an GPIO) is detected at block 842. At block 844, a data collection event is fired, which means the microcontroller of the edge device that performs the sensor task is now able to collect the data from the sensor as data is available.

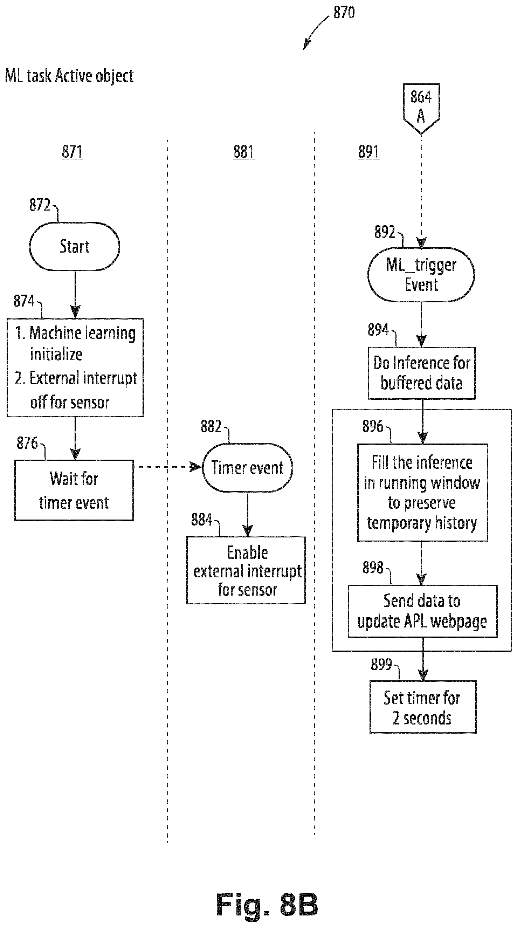

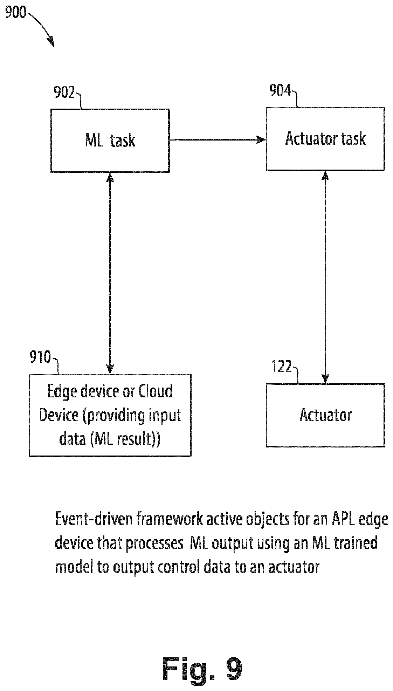

With reference to column 851, a data available event (fired at block 844) is detected at block 852. At block 854, data is read from the sensor and is added to a data buffer. At block 856 the data buffer is checked to determine if it is completely filled with data. If the determination at block 856 is that the data buffer is not completely filled, then at block 862 a wait process is performed to wait for the data buffer to become completely full. If the determination at block 856 is that the data buffer is completely full, then at block 858, the external interrupt for the sensor is disabled. At block sensor 860, an ML trigger is fired. The firing of the ML event is detected by an ML task (such as ML task 902 shown in FIG. 9). tri 860 which will be accepted in 870. 864 is display representation for connection between 820 and 870. Block 864A connects to block 864B of FIG. 8B, showing interactions between the sensor task depicted in sequence diagram 820 of FIG. 8A and the ML task depicted in sequence diagram 870 of FIG. 8B.

FIG. 8B shows a sequence diagram 870 that illustrates example flows performed by an ML task, such as ML task 704 of the active objects shown in FIG. 7. Column 871 represents a start of an ML task, and each of columns 881 and 891 represent an event-based subtask. The event-based subtasks represented by columns 881 and 891 run in parallel. With reference to column 871, an ML task is started at block 872. At block 874, (1) machine learning functionality is initialized, and (2) an external interrupt (e.g., Ext Int 712 shown in FIG. 7) for the sensor is turned off. At block 876, a wait process is performed to wait for a timer event based on the timer set at block 899. With reference to column 881, a timer event is detected at block 882. This timer event can be expiration of the timer set at block 899. At block 884, the sensor's external interrupt is enabled.

With reference to column 891, a machine learning event is triggered at block 892. At block 894, an inference is made for the buffered data using machine learning. At block 896, a running window is filled with the inference (which was made at block 894) in order to preserve a temporary history. At block 898, the windowed history data is sent to update an APL webpage on a locally running server. At block 899, the timer is set for a second predetermined time interval. The second time interval can be shorter than the first interval (e.g., the second time interval can be two seconds).

FIG. 9 is a flow diagram 900 that illustrates an example high-level flow of event-driven framework active objects for an APL edge device, such as one of APL edge devices 102 that may include a trained ML model 106C (e.g., APL edge devices 102 B1-Bn in FIGS. 4 and 5) that receives input data 910 having ML results from an APL edge device (such as APL edge devices 102 A1-An in FIGS. 4 or 5 or cloud device 104 in FIGS. 3 or 5). The APL edge device can also be an APL edge device that receives the ML result from itself (such as APL edge device 102 A1 in FIGS. 1 and 6). The active objects include an ML task 902 and an actuator task 904. ML task 902 is an event-driven active object that handles the input data received from the APL edge device (which can be itself) or cloud device providing the ML result. Actuator task 904 is an event-driven active object that is invoked by ML task 902. Actuator task 904 handles ML processing of the received input data and outputting an ML result as control data configured to control an actuator or other field device. Actuator task 904 can be another event-based task that includes two or more parallel subtasks that are triggered by events and handle sending the inference output by the ML task to one or more target field devices, such as actuator 122.

Depending on the embodiment, another ML task may or may not be used to output the ML result to the external device (e.g., actuator 122).

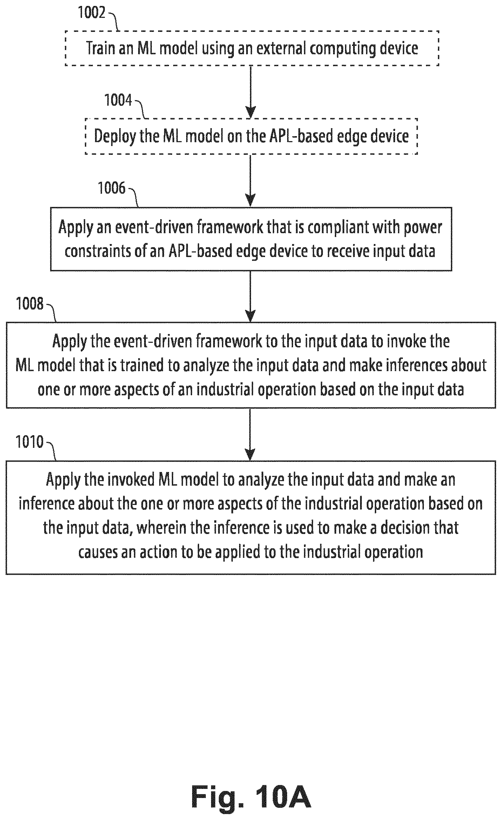

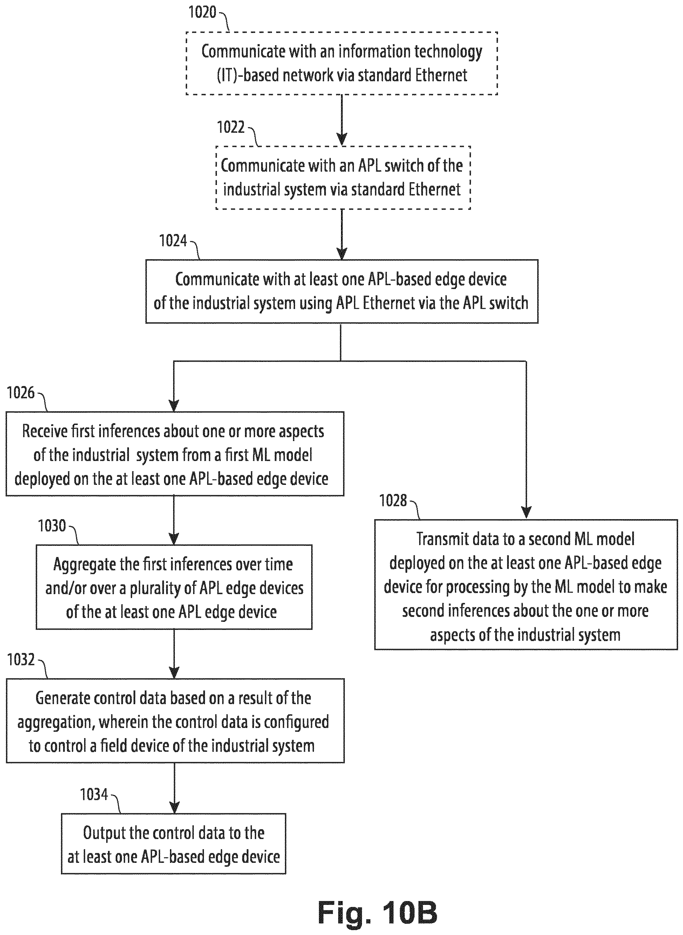

With reference now to FIGS. 10A and 10B, shown are flowcharts demonstrating implementation of the various exemplary embodiments. It is noted that the order of operations shown in FIGS. 10A and 10B is not required, so in principle, the various operations may be performed out of the illustrated order. Also certain operations may be skipped, different operations may be added or substituted, some operations may be performed in parallel instead of strictly sequentially, or selected operations or groups of operations may be performed in a separate application following the embodiments described herein.

FIG. 10A shows a flowchart of method performed by an APL edge device that has power constraints, such as APL edge devices 102 shown in FIGS. 1-6. At block 1, the method optionally includes training an ML model using an external computing device. At block 1004, the method optionally includes deploying the ML model on the APL-based edge device. At block 1006, the method includes applying an event-driven framework that is compliant with power constraints of the APL-based edge device to receive input data. At block 1008, the method includes applying the event-driven framework to the input data to invoke an ML model that is trained to analyze the input data and make inferences about one or more aspects of an industrial system based on the input data. At block 1010, the method includes applying the invoked machine learning model to analyze the input data and make an inference about the one or more aspects of the industrial system based on the input data. The input data is received by the APL-based edge device from one or more source field devices of the industrial system and/or the inference is used to make a decision and cause an action to be applied to the industrial system.

FIG. 10B shows a flowchart of method performed by a cloud device, such as cloud device 104 in FIGS. 1 and 3-6 in communication with one or more APL-based edge devices, wherein the APL-based edge device(s) (such as APL edge devices 102 and 302 shown in FIGS. 1-6) are configured to make inferences using ML. At block 1020, the cloud device communicates with an IT-based network via standard Ethernet. At block 1022, the cloud device communicates with an APL switch (such as APL switch 130 of FIGS. 1, 3, and 6) of the industrial system via standard Ethernet. At block 1024, the cloud device communicates with at least one APL-based edge device of the industrial system using APL Ethernet via the APL switch. Blocks 1026 and/or blocks 1028 can be performed.

At block 1026, the cloud device receives first inferences about one or more aspects of the industrial system from a first ML model deployed on the at least one APL-based edge device. Optionally, at block 1030, cloud device can aggregate the first inferences over time and/or over a plurality of APL edge devices of the at least one APL edge devices. Optionally, at block 1032, the cloud device can generate control data based on a result of the aggregation. The control data can be configured to control a field device of the industrial system, such as an actuator or a relay. In one or more embodiments, the field device can be an alarm device. The cloud device can optionally output the control data to the APL-based edge device. This can cause the APL-based edge device to send control signals to control the field device based on the control data.

At block 1028, the cloud device transmits data to a second ML model deployed on the at least one APL-based edge device for processing by the ML model to make second inferences about the one or more aspects of the industrial system. The second inferences can be configured to be used, e.g., by an APL-based edge device, for generating control signals to control a field device of the industrial system. The data transmitted to the second ML model can be configured to be processed via the second ML model for making the second inferences.

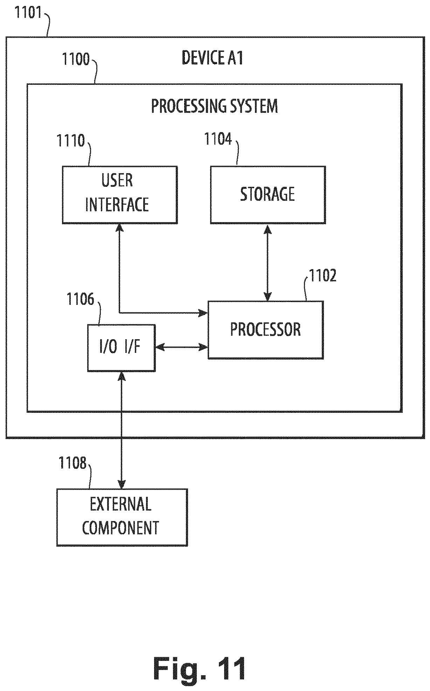

The APL-based edge devices with which the cloud device communicates at blocks 1026 and 1028 can be the same or different edge devices. In embodiments in which the APL-based edge devices with which the cloud device communicates at blocks 1026 and 1028 are the same, the first and second ML models can be deployed on separate hardware or software frameworks, or can share one or more portions of the same hardware and/or software frameworks. With reference to FIG. 11, a block diagram of an example processing system 1100 is shown, which provides an example configuration of a computing system used by computing components of the industrial system (e.g., APL edge devices or cloud devices (such as APL edge devices 102 or 302 or cloud device 104 shown in FIGS. 1-6) that can be configured, in certain embodiments, to host a trained ML model deployed thereon (such as ML models 106A, 106B, 106C shown in FIGS. 1-6) or computers (such as computers 204 and 504 shown in FIGS. 2 and 5) that are configured to train the ML models. Additionally, all or portions of the computing components of the industrial system could be configured as software, and processing system 1100 could represent such portions. Processing system 1100 is only one example of a suitable system and is not intended to suggest any limitation as to the scope of use or functionality of embodiments of the disclosure described herein. Processing system 1100 can be implemented using hardware, software, and/or firmware. Regardless, processing system 1100 is capable of being implemented and/or performing functionality as set forth in the disclosure.

Processing system 1100 is shown in the form of a general-purpose computing device. Processing system 1100 includes a processing device 1102, memory 1104, an input/output (I/O) interface (I/F) 1106 that can communicate with an internal component, such as a user interface 1110, and optionally an external component 1108.

In certain embodiments (such as when processing system 1100 is implemented in an APL edge device), processing device 1102 can include, for example, a PLOD, microprocessor, DSP, a microcontroller, a field programmable gate array (FPGA), an application specific integrated circuit (ASIC), and/or other discrete or integrated logic circuitry having similar processing capabilities.

In certain embodiments, processing device 1102 and the memory 1104 can be included in components provided in an FPGA, ASIC, microcontroller, or microprocessor, for example.

In certain embodiments (such as when processing system 1100 is implemented in a cloud device or a computer device that trains an ML model), processing device 1102 can include a GPU or TPU and/or a neural network.

Memory 1104 can include, for example, volatile and non-volatile memory for storing data temporarily or long term, and for storing programmable instructions executable by the processing device 1102. Memory 1104 can be a removable (e.g., portable) memory for storage of program instructions. I/O I/F 1106 can include an interface and/or conductors to couple to the one or more internal components 1110 and/or external components 1108.

In certain embodiments, I/O I/F 1106 can be a two-wire connection of an APL edge device, the two-wire connection being configured for communicating with components of a local network of the APL edge device and for accessing a remote network.

Embodiments of the computing components of the industrial system may be implemented or executed by one or more computer systems, such as a microprocessor. Each processing system 1100 can be included within the computing components of the industrial system, or multiple instances thereof.

In certain embodiments, processing system 1100 is embedded in a device, such as device A1 1101, e.g., an edge device. Portions of the processing system 1100 can be provided externally, such by way of an interface.

Processing system 1100 is only one example of a suitable system and is not intended to suggest any limitation as to the scope of use or functionality of embodiments of the disclosure described herein. Regardless, processing system 1100 is capable of being implemented to perform any of the functionality set forth hereinabove.

Processing system 1100 may be described in the general context of execution of computer system-executable instructions, such as program modules. Generally, program modules may include routines, programs, objects, components, logic, data structures, and so on that perform particular tasks or implement particular abstract data types.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It is to be understood that the above description is intended to be illustrative, and not restrictive. Many other implementation examples are apparent upon reading and understanding the above description. Although the disclosure describes specific examples, it is recognized that the systems and methods of the disclosure are not limited to the examples described herein, but may be practiced with modifications within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method performed by an Advanced Physical Layer (APL)-based edge device with power constraints, the method comprising: applying an event-driven framework that is compliant with power constraints of the APL-based edge device to receive input data;
applying the event-driven framework to the input data to invoke a machine learning (ML) model that is trained to analyze the input data and make inferences about one or more aspects of an industrial system based on the input data; and
applying the invoked machine learning model to analyze the input data and make an inference about the one or more aspects of the industrial system based on the input data,
wherein the input data is received by the APL-based edge device from one or more source field devices of the industrial system and/or the inference is used make a decision and cause an action to be applied to the industrial system.

2. The method of claim 1, wherein the method further comprises:
training the ML model using an external computing device; and
deploying the ML model on the APL-based edge device.

3. The method of claim 1, wherein the action is caused by controlling one or more actuators communicatively coupled to the to the APL-based edge device.

4. The method of claim 1, further comprising outputting the inference by transmitting the inference to a second APL edge device that causes the action.

5. The method of claim 1, further comprising outputting the inference by transmitting the inference to a cloud-based processor that causes a second APL edge device to cause the action.

6. The method of claim 1, wherein the input data includes sensor data output by a sensor, wherein analyzing the input data and the making the inference about the one or more aspects of the industrial operation includes detecting and characterizing normal operating conditions associated with the one or more aspects of the industrial system based on the sensor input data, and recognizing abnormal conditions associated with the one or more aspects of the industrial system based on the sensor input data.

7. The method of claim 1, wherein the input data includes machine-learning result data provided by another APL device or a cloud device that analyzed sensor data using a trained ML model, wherein analyzing the input data and the making the inference about the one or more aspects of the industrial system includes detecting and characterizing normal operating conditions associated with the one or more aspects of the industrial system based on the sensor input data, and recognizing abnormal conditions associated with the one or more aspects of the industrial system based on the machine-learning result data.

8. The method of claim 1, further comprising:
generating, using the inference, control data configured to control a device; and
outputting the control data.

9. An Advanced Physical Layer (APL)-based edge device with power constraints, the APL-based edge device comprising:
an embedded processing device and memory, the memory configured to store a plurality of programmable instructions, and
the processing device in communication with the memory, wherein the processing device, upon execution of the plurality of programmable instructions is configured to:
apply an event-driven framework that is compliant with power constraints of the APL-based edge device to receive input data;
apply the event-driven framework to the input data to invoke a machine learning (ML) model that is trained to analyze the input data and make inferences about one or more aspects of an industrial system based on the input data; and
apply the invoked machine learning model to analyze the input data and make an inference about the one or more aspects of the industrial system based on the input data,
wherein the input data is received by the APL-based edge device from one or more source field devices of the industrial system and/or the inference is used to make a decision and cause an action to be applied to the industrial system.

10. The APL-based edge device of claim 9, wherein the action is caused by controlling one or more actuators communicatively coupled to the to the APL-based edge device.

11. The APL-based edge device of claim 9, wherein the processing device, upon execution of the plurality of programmable instructions, is further configured to: output the inference by transmitting the inference to a second APL edge device that causes the action.

12. The APL-based edge device of claim 9, wherein the processing device, upon execution of the plurality of programmable instructions, is further configured to output the inference by transmitting the inference to a cloud-based processor that causes a second APL edge device to cause the action.

13. The APL-based edge device of claim 9, wherein the input data includes sensor data output by a sensor, wherein analyzing the input data and the making the inference about the one or more aspects of the industrial operation includes detecting and characterizing normal operating conditions associated with the one or more aspects of the industrial system based on the sensor input data, and recognizing abnormal conditions associated with the one or more aspects of the industrial system based on the sensor input data.

14. The APL-based edge device of claim 9, wherein the input data includes machine-learning result data provided by another APL device or a cloud device that analyzed sensor data using a trained ML model, wherein analyzing the input data and the making the inference about the one or more aspects of the industrial operation includes detecting and characterizing normal operating conditions associated with the one or more aspects of the industrial system based on the sensor input data, and recognizing abnormal conditions associated with the one or more aspects of the industrial system based on the machine-learning result data.

15. The APL-based edge device of claim 9, wherein the processing device, upon execution of the plurality of programmable instructions, is further configured to:
generate, using the inference, control data configured to control a device; and
output the control data.

16. A method performed by a cloud-based computing device of an industrial system, the method comprising:
communicating with an information technology (IT)-based network via standard Ethernet;
communicating with an APL switch of the industrial system via standard Ethernet;
communicating with at least one APL-based edge device of the industrial system using APL Ethernet via the APL switch; and
receiving first inferences about one or more aspects of the industrial system from a first ML model deployed on the at least one APL-based edge device and/or transmitting data to a second ML model deployed on the at least one APL-based edge device for processing by the ML model to make second inferences about the one or more aspects of the industrial system.

17. The method of claim 16, wherein the first inferences are received, the method further comprising aggregating the first inferences over time and/or over a plurality of APL edge devices of the at least one APL edge devices.

18. The method of claim 17, further comprising:
generating control data based on a result of the aggregation, wherein the control data is configured to control a field device of the industrial system; and
outputting the control data to the at least one APL-based edge device.

19. The method of claim 16, wherein the second inferences are configured to be used for generating control signals to control a field device of the industrial system, and the data transmitted to the second ML model is configured to be processed via the second ML model for making the second inferences.
